# EUROPÄISCHE PATENTSCHRIFT

(11) **EP 2 418 748 B1**
(45) Veröffentlichungstag und Bekanntmachung des Hinweises auf die Patenterteilung: **08.07.2015**
(21) Anmeldenummer: 11006416.9
(22) Anmeldetag: 04.08.2011
(51) Int. Cl.: H02H 9/00, H02H 9/02

(54) **Energieversorgungsvorrichtung**
Energy supply device
Dispositif d'alimentation en énergie

(30) Priorität: 10.08.2010 DE 102010033954
(43) Veröffentlichungstag der Anmeldung: 15.02.2012
(73) Patentinhaber: KROHNE Messtechnik GmbH, 47058 Duisburg (DE)
(72) Erfinder: Poremba, Andreas, 42107 Wuppertal (DE); Lehmkuhl, Jürgen, 46535 Dinslaken (DE)
(74) Vertreter: Gesthuysen Patent- und Rechtsanwälte

(56) Entgegenhaltungen:
- WO-A1-02/095895
- US-A- 5 694 283

## Beschreibung

Die Erfindung betrifft eine Energieversorgungsvorrichtung zur eigensicheren Energieversorgung eines eigensicheren Laststromkreises, mit einer Spannungsquelle, einer Leistungsbegrenzungsschaltung, einer Strombegrenzungsschaltung und einem Laststromkreisanschluss, wobei an den Laststromkreisanschluss der Laststromkreis anschließbar ist, wobei die Leistungsbegrenzungsschaltung und die Strombegrenzungsschaltung zwischen der Spannungsquelle und dem Laststromkreisanschluss wirksam sind und wobei die Leistungsbegrenzungsschaltung durch wenigstens zwei steuerbare Halbleiterbauelemente gebildet wird.

Bestimmungen für die Konstruktion und Prüfung eigensicherer Betriebsmittel, die für die Verwendung in gasexplosionsgefährdeten Bereichen bestimmt sind, sowie für zugehörige Betriebsmittel, die für den Anschluss an eigensichere Stromkreise, die in solche Bereiche hineinführen, werden von der Norm IEC 60079-11 festgelegt. Diese Norm gilt auch für elektrische Betriebsmittel oder Teile elektrischer Betriebsmittel, die sich außerhalb des gasexplosionsgefährdeten Bereiches befinden oder durch eine andere Zündschutzart nach IEC 60079-0 geschützt sind, sofern die Eigensicherheit der elektrischen Stromkreise im gasexpiosionsgefährdeten Bereich von der Auslegung und der Bauart dieser elektrischen Betriebsmittel oder von Teilen dieser Betriebsmittel abhängen kann.

Die Zündschutzart "Eigensicherheit" beruht auf der Begrenzung von elektrischer Energie innerhalb von Betriebsmitteln und Verbindungsleirungen, die einer explosionsfähigen Atmosphäre ausgesetzt sind, auf ein Niveau unterhalb dessen eine Zündung entweder durch Funkenbildung oder Erwärmung nicht mehr hervorgerufen werden kann,

Von besonderer Bedeutung ist innerhalb der einschlägigen Normen der Begriff des "Fehlers". Damit ist jeder Defekt eines beliebigen Bauteils, einer Trennung, Isolierung oder Verbindung zwischen Bauteilen gemeint, der durch IEC 60079-11 nicht als nichtstöranfällig festgelegt ist und von dem die Eigensicherheit eines Stromkreises abhängt. Diese Fehler werden in zählbare Fehler und nichtzählbare Fehler unterschieden. Zählbare Fehler sind Fehler, die in Teilen des elektrischen Betriebsmittels auftreten die mit den Bauanforderungen von IEC 60079-11 übereinstimmen. Andere Fehler werden als nichtzählbare Fehler bezeichnet.

Aus der Norm ergibt sich beispielsweise für elektrische Betriebsmittel des Schutzniveau "ia" die Anforderung, dass bei einer definierten angelegten Spannung die eigensicheren Stromkreise des Betriebsmittels im ungestörten Betrieb und bei Vorhandensein von zwei zählbaren Fehlern zuzüglich derjenigen nichtzählbaren Fehler, die die ungünstigste Bedingung ergeben, keine Zündung verursachen dürfen.

Zur Vermeidung der thermischen Zündung müssen alle Oberflächen von Bauteilen, Gehäusen und der Verdrahtung, die mit explosionsfähigen Gasatmosphären in Verbindung kommen können, hinsichtlich der Höchsttemperatur beurteilt und/oder geprüft werden. Hieraus ergeben sich für Bauelemente in Abhängigkeit von der Oberflächengröße und der maximalen Umgebungstemperatur Obergrenzen für die zulässige Verlustleistung. Daher ist es erforderlich, die Leistung, die diesen Bauelementen maximal zur Verfügung gestellt wird, zu begrenzen.

Die Auswahl zulässiger Bauelemente für die Strombegrenzung ist jedoch eingeschränkt, Steuerbare Halbleiterbauelemente dürfen als in Reihe geschaltete Strombegrenzungselemente nur in elektrischen Betriebsmitteln der Schutzniveaus "ib" und ""ic" verwendet werden. Jedoch dürfen für die Leistungsbegrenzung für Betriebsmittel des Schutzniveaus "ia" in Reihe geschaltete Strombegrenzer aus steuerbaren und nicht steuerbaren Halbleiterbauelementen eingesetzt werden.

Aus der DE 36 22 268 C1 ist eine elektrische Sicherheitsbarriere zum Schutz von in explosionsgefährdeten Bereichen befindlichen Verbrauchern und/oder Messwertgebern bekannt, die über Leitungen mit außerhalb der explosionsgefährdeten Bereichen befindlichen Schaltungsteilen verbunden sind. Bei dieser Sicherheitsbarriere werden zwei in Serie geschaltete Längssteuerglieder verwendet, die durch vier Steuerkreise gesteuert werden. Die Steuerspannung für die Steuerkreise ist hierbei die Summe zumindest eines Teils der Ausgangs-Spannung eines Strommessgliedes und zumindest eines Teils einer dem Spannungsabfall in den Längssteuergliedern entsprechenden Spannung. Insbesondere ist das Strommessglied ein ohmscher Widerstand, und die Längssteuerglieder und die Steuerkreise werden durch Transistoren gebildet. Der ohmsche Widerstand wird hierbei so gewählt, dass bei einem gewünschten Grenzstrom ein derartiger Spannungsabfall an diesem Widerstand erzeugt wird, so dass die Steuerspannung einen ausreichend hohen Wert - beispielsweise 0,6 V - erreicht, um einen Transistor der Steuerkreise leitend zu schalten, wodurch wiederum der Transistor des zugeordneten Längssteuergliedes in einen nichtleitenden Zustand geschaltet wird. Der ohmsche Widerstand dient hierbei nicht zur Begrenzung eines Kurzschlussstromes in einem angeschlossenen Verbraucher, sondern zur Einstellung eines gewünschten Grenzstromes, der zu einer entsprechenden Ansteuerung der Halbleiterbauelemente führt. Auch genügt die elektrische Sicherlieitsbarriere nicht dem Schutzniveau "ia", da bei Kurzschluss beider Längssteuerglieder, oder des ersten Längssteuergliedes und des Transistors eines zugehörigen Steuerkreises, keine ausreichende Begrenzung eines Kurzschlussstromes in einem angeschlossenen Verbraucher gewährleistet ist.

Aus dem Stand der Technik ist bekannt, Schmelzsicherungen zur Strom- oder Leistungsbegrenzung zu verwenden. Bei einem Fehlerfall, der das Auslösen und Schmelzen einer Schmelzsicherung zur Folge hat, muss jedoch die Schmelzsicherung ausgetauscht werden, was bei schwer zugänglichen Energieversorgungsvorrichtungen zu einem erheblichem Aufwand führen kann. Ebenfalls ist aus dem Stand der Technik bekannt, Widerstände zur Leistungsbegrenzung zu verwenden. Um beispielsweise die Leistung auf einen zur Vermeidung thermischer Zündungen erforderlichen Wert von 1 Watt zu begrenzen, ist bei gegebener Spannung von 12 Volt ein Widerstand von mindestens 144 Ohm erforderlich. Die Verwendung eines Widerstandes zur Leistungsbegrenzung hat jedoch den Nachteil, dass an diesem Widerstand eine unerwünscht hohe Verlustleistung abfällt.

Damit ist es die Aufgabe der Erfindung, eine Energieversorgungsvorrichtung anzugeben, die eine möglichst geringe Verlustleistung aufweist.

Die zuvor hergeleitete und aufgezeigte Aufgabe ist ausgehend von der eingangs beschriebenen Energieversorgungsvorrichtung dadurch gelöst, dass die Strombegrenzungsschaltung durch wenigstens einen Widerstand gebildet wird, wobei der Widerstand einen Widerstandswert aufweist, der gerade ausreicht, einen Kurzschlussstrom auf eine Stromstärke zu begrenzen, bei der keine Gefahr einer Funkenzündung besteht.

Aus Tabelle A.1 der IEC 60079.11 ergibt sich, dass zur Begrenzung lediglich des Kurzschlussstromes auf den bei einer gegebenen Spannung von 12 Volt zulässigen Höchstwert für die Betriebsmittelgruppe IIC bereits ein Widerstand von etwa 3,6 Ohm ausreicht. Demnach fällt hierbei an dem Widerstand eine deutlich geringere Verlustleistung ab als bei der Verwendung eines Widerstandes zur Leistungsbegrenzung. Ein weiterer Vorteil besteht darin, dass bei der erfindungsgemäßen Energieversorgungsvorrichtung keine Schmelzsicherungen verwendet werden, die prinzipbedingt nach einmaliger Auslösung ausgetauscht werden müssen. Bei der erfindungsgemäßen Energieversorgungsvorrichtung ist der Widerstand als ein nichtstöranfälliger Widerstand nach IEC 60079-11 ausgebildet, wie es für die Schutzniveaus "ia" und "ib" erforderlich ist, Auch die Ausgestaltung des Widerstandes durch mehrere Widerstände, d. h. insbesondere durch ein Widerstandsnetzwerk liegt im Rahmen der Erfindung, solange die Eigensicherheit hierdurch weiterhin gewährleistet ist.

Allgemein ist erfindungsgemäß vorgesehen, die Energieversorgungsvorrichtung derart auszugestalten, dass sie den Anforderungen der IEC 60079-11 genügt. Hierzu zählt insbesondere, dass die Energieversorgungsvorrichtung, in dem Falle, dass sie für das Schutzniveau "ia" oder "ib" vorgesehen ist, derart ausgestaltet ist, dass sowohl im ungestörten Betrieb als auch nach Anwendung der für das entsprechende Schutzniveau festgelegten Fehlerbedingungen die verbleibenden Bauteile, von denen die Zündschutzart abhängt - mit Ausnahme von Bauteilen wie Transformatoren, Sicherungen, thermische Auslöser, Relais, Optokoppler und Schalter - mit nicht mehr als zwei Dritteln ihres maximalen Stroms, ihrer maximalen Spannung und ihrer maximalen Leistung betrieben werden; dabei sind der maximale Strom, die maximale Spannung und die maximale Leistung bezogen auf den Bemessungswert der Bauteile, die Einbaubedingungen und den festgelegten Temperaturbereich.

Die Spannungsquelle der erfindungsgemäßen Energieversorgungsvorrichtung ist ebenfalls entsprechend den Anforderungen für die Eigensicherheit ausgestaltet, insbesondere ist die durch die Spannungsquelle bereit gestellte Eingangsspannung z. B. durch Zenerdioden auf eine Höchstspannung begrenzt.

Die erfindungsgemäße Energieversorgungsvorrichtung ist insbesondere geeignet zur eigensicheren Energieversorgung von Durchflussmessgeräten, wie z. B. Coriolismassedurchflussmessgeräten oder magnetisch-induktiven Durchflussmessgeräten,

Gemäß einer vorteilhaften Weiterbildung der Erfindung ist vorgesehen, dass die Leistungsbegrenzungsschaltung und die Strombegrenzungsschaltung seriell hintereinander geschaltet sind, insbesondere die Strombegrenzungsschaltung mit dem Laststromkreisanschluss verbunden ist. Hierdurch wird sichergestellt, dass in jedem Falle der Laststromkreisanschluss sowohl durch die Strombegrenzungsschaltung als auch durch die Leistungsbegrenzungsschaltung abgesichert ist. Alternativ kann die serielle Hintereinanderschaltung auch derart erfolgen, dass die Leistungsbegrenzungsschaltung mit dem Laststromkreisanschluss verbunden ist.

Gemäß einer weiteren vorteilhaften Weiterbildung der Erfindung ist vorgesehen, dass der dem Laststromkreisanschluss entnommene Laststrom mit einem Strommessmittel gemessen wird und wenigstens eines der steuerbaren Halbleiterbauelemente anhand des gemessenen Laststromes durch eine Leistungssteuerung gesteuert wird. Durch diese Leistungssteuerung wird auf einfache und effiziente Weise gewährleistet, dass im Falle einer die Eigensicherheit gefährdend hohen Leistungsaufnahme des Laststromkreises die steuerbaren Halbleiterbauelemente dahingehend gesteuert werden, dass die Leistungsaufnahme die einzuhaltenden Obergrenzen nicht überschreitet. Insbesondere ist es vorteilhaft, die steuerbaren Halbleiterbauelemente im Falle einer die Eigensicherheit gefährdend hohen Leistungsaufnahme des Laststromkreises derart zu steuern, dass der Stromfluss durch die steuerbaren Halbleiterbauelemente vollständig unterbrochen wird; die steuerbaren Halbleiterbauelemente werden von der Leistungssteuerung in diesem Fall im Schaltbetrieb betrieben.

Bei einer bevorzugten Ausgestaltung der Erfindung ist vorgesehen, dass wenigstens eines der zwei steuerbaren Halbleiterbauelemente durch wenigstens eine als Zeitschalter ausgestaltete Leistungssteuerung steuerbar ist. Mit einem Zeitschalter ist hierbei ein elektronisches Bauteil gemeint, das nach seiner Aktivierung durch ein entsprechendes Aktivierungssignal für einen vorbestimmten Zeitraum ein definiertes Ausgangssignal liefert. Erfindungsgemäß wird ein derartiger Zeitschalter verwendet, um wenigstens eines der zwei steuerbaren Halbleiterbauelemente zu steuern. Insbesondere ist jedem Zeitschalter ein Komparator zugeordnet, durch den wiederum der Zeitschalter steuerbar ist.

Eine ganz besonders vorteilhafte Weiterbildung der Erfindung besteht darin, dass zwei Zeitschalter vorgesehen sind, von denen jeweils einer eines der beiden steuerbaren Halbleiterbauelemente steuert, insbesondere derart steuert, dass im Falle einer die Eigensicherheit gefährdend hohen Leistungsaufnahme des Laststromkreises beide steuerbaren Halbleiterbauelemente den Stromfluss für einen vorbestimmten Zeitraum vollständig unterbrechen. Nach Ablauf des vorbestimmten Zeitraums schalten beide steuerbaren Halbleiterbauelemente, solange keine die Eigensicherheit gefährdend hohen Leistungsaufnahme des Laststromkreises mehr vorliegt, wieder in den leitenden Zustand. Daraufhin kann der normale Betrieb fortgesetzt werden.

Gemäß einer vorteilhaften Weiterbildung der Erfindung ist vorgesehen, dass das Strommessmittel zur Messung des Laststroms zumindest teilweise durch den Widerstand gebildet ist. Die Messung des Laststromes am Widerstand stellt eine einfache und kostengünstige Möglichkeit dar, den Laststrom zu überwachen, da so kein zusätzlicher Widerstand zur Messung des Laststromes vorzusehen ist.

Eine bevorzugte Weiterbildung der Erfindung zeichnet sich dadurch aus, dass der Spannungsabfall über dem Widerstand wenigstens einem als Differenzenverstärker beschalteten Operationsverstärker als Eingangssignal dient und das Ausgangssignal des Operationsverstärkers als Maß für den Laststrom fungiert. Dieses als Maß für den Laststrom fungierende Ausgangssignal wird bei der erfindungsgemäßen Energieversorgungsvorrichtung vorzugsweise durch eine entsprechende schaltungsmäßige Verbindung der Leistungssteuerung zugeführt.

Es hat sich als besonders vorteilhaft herausgestellt, wenn die Leistungsaufnahme des eigensicheren Laststromkreises direkt von einer weiteren Leistungssteuerung gesteuert wird. Diese zusätzlich und direkt wirkende weitere Leistungssteuerung greift folglich erst im Laststromkreis selbst ein, von der Energieversorgungsvorrichtung aus gesehen also lastseitig jenseits des Laststromkreisanschlusses, Durch diese Steuerung wird bereits auf Seiten des Laststromkreises die Leistungsaufnahme begrenzt, so dass im Nennbetrieb die Leistungsbegrenzungsschaltung der erfindungsgemäßen Energieversorgungsvorrichtung nicht auslöst, da bereits durch die weitere, direkt auf den Lasrstromkreis wirkende Leistungssteuerungseinrichtung die Leistungsaufnahme des eigensicheren Laststromkreises auf eigensichere Werte begrenzt wurde.

Gemäß einer weiteren Ausgestaltung der Erfindung ist vorgesehen, dass die weitere Leistungssteuerungseinrichtung einen Digital/Analogwandler aufweist. Dies ist vor allem in Zusammenhang mit einer weiteren besonderen Ausgestaltung der Erfindung vorteilhaft, bei der dem Digital/Analogwandler ein digitales Eingangssignal von einem Mikroprozessor bereitgestellt wird und das analoge Ausgangssignal des Digital/Analogwandlers zur Steuerung der Leistungsaufnahme des eigensicheren Laststromkreises dem eigensicheren Laststromkreis zur Verfügung gestellt wird. Die Verwendung eines Digital/Analogwandlers in Verbindung mit einem Mikroprozessor ermöglicht die automatisierte Steuerung der Leistungsaufnahme des eigensicheren Laststromkreises von außerhalb des explosionsgefährdeten Bereichs. Da die weitere Leistungssteuerung mit dem Laststromkreis leitend verbunden ist, ist es vorteilhaft, dass auch die weitere Leistungssteuerung den Anforderungen der IEC 60079-11 genügt.

Gemäß einer letzten hier beschriebenen Weiterbildung der Erfindung ist vorgesehen, dass die Spannungsquelle auf der Power-i-Technologie basiert.

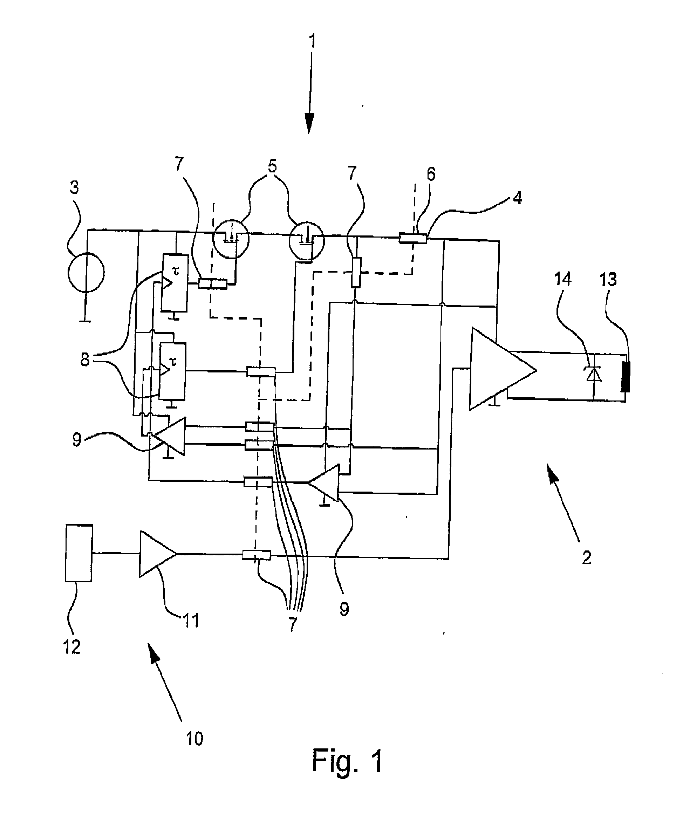

Im Einzelnen gibt es nun eine Vielzahl von Möglichkeiten, die erfindungsgemäße Energieversorgungsvorrichtung auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: schematisch die erfindungsgemäße Energieversorgungsvorrichtung in Verbindung mit einem von einer weiteren Leistungssteuerung gesteuerten Laststromkreis.

In der Fig. 1 ist an eine Energieversorgungsvorrichtung 1 ein eigensicherer Laststromkreis 2 angeschlossen. Die Energieversorgungsvorrichtung 1 weist eine Spannungsquelle 3 auf, die eine eigensicher begrenzte Eingangsspannung bereitstellt. Die Energieversorgungsvorrichtung 1 weist ferner eine Leistungsbegrenzungsschaltung, eine Strombegrenzungsschaltung und einen Laststromkreisanschluss 4 auf, an den der Laststromkreis 2 angeschlossen ist. Die Leistungsbegrenzungsschaltung wird durch zwei steuerbare Halbleiterbauelemente 5 gebildet. Die Strombegrenzungsschaltung wird durch einen Widerstand 6 gebildet. Die beiden steuerbaren Halbleiterbauelemente 5 sind seriell hintereinander geschaltet und zwischen der Spannungsquelle 3 und dem Widerstand 6 angeordnet. Der Widerstand 6 bildet mit seinem nicht an die steuerbaren Halbleiterbauelemente 5 angeschlossenen Anschluss den Laststromkreisanschluss 4.

Wesentlich für die dargestellte Energieversorgungseinrichtung 1 ist nun, dass der Widerstand 6, der die Strombegrenzungsschaltung bildet, einen Widerstandswert aufweist, der gerade ausreicht, einen Kurzschlussstrom auf eine Stromstärke zu begrenzen, bei der keine Gefahr einer Funkenzündung besteht. Durch diese Bemessung des Widerstandswertes ergibt sich eine wesentlich geringere Verlustleistung als bei der Verwendung des Widerstandes 6 sowohl zur Strom- als auch zur Leistungsbegrenzung.

Eine besondere Eigenschaft der Energieversorgungseinrichtung 1 ist, dass die erforderliche Leistungsbegrenzung mittels der steuerbaren Halbleiterelemente 5 erfolgt. An die Steuerungsanschlüsse der beiden steuerbaren Halbleiterbauelemente 5 ist jeweils über einen Sicherheitswiderstand 7 ein Zeitschalter 8 angeschlossen. Das Eingangssignal für die Zeitschalter 8 wird durch als Differenzenverstärker beschaltete Operationsverstärker 9 bereitgestellt. Beiden Operationsverstärkern 9 dient der Spannungsabfall über dem Widerstand 6 als Eingangssignal, und beide Operationsverstärker 9 liefern Ausgangssignale, die als Maß für den Laststrom fungieren, Mittels dieser Schaltung erfolgt die Leistungssteuerung des dem Laststromkreisanschluss 4 entnommenen Laststroms anhand des gemessenen Laststroms.

Durch weitere Sicherheitswiderstände 7 wird die gesamte Energieversorgungsvorrichtung 1 in eigensicher abgetrennte Bereiche unterteilt, insbesondere der im explosionsgefährdeten Bereich angeordnete Laststromkreis 2 ist eigensicher mit den außerhalb des explosionsgefährdeten Bereichs liegenden Betriebsmitteln verbunden. Die Grenzen zwischen den so abgetrennten Bereichen sind in der Fig.1 1 mit gestrichelten Linien gekennzeichnet.

Die Leistungsaufnahme des eigensicheren Laststromkreises 2 wird von einer weiteren Leistungssteuerung 10 gesteuert. Diese weitere Leistungssteuerung 10 begrenzt die Leistungsaufnahme des eigensicheren Laststromkreises 2 auf Werte, die eine Entzündung an heißen Oberflächen im explosionsgefährdeten Bereich ausschließen. Die weitere Leistungssteuerung 10 weist einen Digital/Analogwandler 11 auf, dem ein digitales Eingangssignal von einem Mikroprozessor 12 bereitgestellt wird. Der Mikroprozessor 12 realisiert hardwaremäßig ein hier nicht im Detail erörtertes Verfahren zur Steuerung oder Regelung der Leistungsaufnahme des Laststromkreises 2, das auf ihm softwaremäßig implementiert ist und liefert einen digitalen Vorgabewert für die Soll-Leistungsaufnahme des Laststromkreises 2. Das zu dem digitalen Vorgabewert korrespondierende analoge Ausgangssignal des Digital/Analogwandlers 11 wird dem eigensicheren Laststromkreis 2 über einen Sicherheitswiderstand 7 zur Steuerung der Leistungsaufnahme zur Verfügung gestell t.

Der Laststromkreis 2 weist in dem hier dargestellten Beispiel eine Sensorspule 13 auf; der Laststromkreis kann beliebige andere Lasten aufweisen, dies hängt von der konkreten Anwendung ab. Durch eine zur Spule 13 parallel geschaltete Zenerdioden 14 ist die üblicherweise sehr große Induktivität der Sensorspule 13 unwirksam, d. h. eine in der Sensorspule 13 durch eine schnelle Stromänderung induzierte Spannung wird durch die Zenerdioden auf einen eigensicheren Wert begrenzt.

## Patentansprüche

1. Energieversorgungsvorrichtung (1) zur eigensicheren Energieversorgung eines eigensicheren Laststromkreises (2), mit einer Spannungsquelle (3), einer Leistungsbegrenzungsschaltung, einer Strombegrenzungsschaltung und einem Laststromkreisanschluss (4), wobei an den Laststromkreisanschluss (4) der Laststromkreis (2) anschließbar ist, wobei die Leistungsbegrenzungsschaltung und die Strombegrenzungsschaltung zwischen der Spannungsquelle (3) und dem Laststromkreisanschluss (4) wirksam sind, wobei die Leistungsbegrenzungsschaltung durch wenigstens zwei in Reihe geschaltete steuerbare Halbleiterbauelemente (5) gebildet wird,
**dadurch gekennzeichnet,**
**dass** die Strombegrenzungsschaltung durch wenigstens einen mit den steuerbaren Halbleiterbauelementen (5) in Reihe geschalteten Widerstand (6) gebildet wird, und dass
der Widerstand (6) der Strombegrenzungsschaltung einen Widerstandswert aufweist, der gerade ausreicht, einen Kurzschlussstrom auf eine Stromstärke zu begrenzen, bei der keine Gefahr einer Funkenzündung besteht.

2. Energieversorgungsvorrichtung (1) nach Anspruch 1, **dadurch gekennzeichnet, dass** die Leistungsbegrenzungsschaltung und die Strombegrenzungsschaltung seriell hintereinander geschaltet sind, insbesondere die Strombegrenzungsschaltung mit dem Laststromkreisanschluss (4) verbunden ist.

3. Energieversorgungsvorrichtung (1) nach Anspruch 1 oder 2, **dadurch gekennzeichnet, dass** der dem Laststromkreisanschluss (4) entnommene Laststrom mit einem Strommessmittel gemessen wird und wenigstens eines der steuerbaren Halbleiterbauelemente (5) anhand des gemessenen Laststromes durch eine Leistungssteuerung gesteuert wird.

4. Energieversorgungsvorrichtung (1) nach Anspruch 3, **dadurch gekennzeichnet, dass** wenigstens eines der zwei steuerbaren Halbleiterbauelemente (5) durch wenigstens eine als Zeitschalter (8) ausgebildete Leistungssteuerung derart gesteuert wird, dass im Falle einer die Eigensicherheit gefährdend hohen Leistungsaufnahme des Laststromkreises (2) das Halbleiterbauelement (5) den Stromfluss für einen vorbestimmten Zeitraum unterbricht, und dass der Zeitschalter (8) nach Ablauf des vorbestimmten Zeitraums das Halbleiterbauelement (8), solange keine die Eigensicherheit gefährdend hohen Leistungsaufnahme des Laststromkreises (2) mehr vorliegt, wieder in den leitenden Zustand schaltet.

5. Energieversorgungsvorrichtung (1) nach Anspruch 3 oder 4, **dadurch gekennzeichnet, dass** das Strommessmittel zur Messung des Laststroms zumindest teilweise durch den Widerstand (6) gebildet ist.

6. Energieversorgungsvorrichtung (1) nach Anspruch 5, **dadurch gekennzeichnet, dass** der Spannungsabfall über dem Widerstand (6) wenigstens einem als Differenzenverstärker beschalteten Operationsverstärker (9) als Eingangssignal dient und das Ausgangssignal des Operationsverstärkers (9) als Maß für den Laststrom fungiert.

7. Energieversorgungsvorrichtung (1) nach einem der Ansprüche 1 bis 6, **dadurch gekennzeichnet, dass** die Leistungsaufnahme des eigensicheren Laststromkreises (2) direkt von einer weiteren Leistungssteuerung (10) gesteuert wird.

8. Energieversorgungsvorrichtung (1) nach Anspruch 7, **dadurch gekennzeichnet, dass** die weitere Leistungssteuerung (10) einen Digital/Analogwandler (11) aufweist.

9. Energieversorgungsvorrichtung (1) nach Anspruch 8, **dadurch gekennzeichnet, dass** dem Digital/Analogwandler (11) ein digitales Eingangssignal von einem Mikroprozessor (12) bereitgestellt wird und das analoge Ausgangssignal des Digital/Analogwandlers (11) zur Steuerung der Leistungsaufnahme des eigensicheren Laststromkreises (2) durch die weitere Leistungssteuerung (10) dem eigensicheren Laststromkreis (2) zur Verfügung gestellt wird.

10. Energieversorgungsvorrichtung nach einem der Ansprüche 1 bis 9, **dadurch** gekennzeichet, **dass** die Spannungsquelle (3) auf der Power-i-Technologie basiert.

## Claims

1. Power supply device (1) for intrinsically safe power supply of an intrinsically safe load circuit (2) having a voltage source (3), a power-limiting circuit, a current-limiting circuit and a load circuit connector (4), wherein the load circuit connector (4) is connectable to the load circuit (2), wherein the power-limiting circuit and the current-limiting circuit are active between the voltage source (3) and the load circuit connector (4), wherein the power-limiting circuit is formed by at least two controllable semiconductor devices (5) switched in series
**characterized in**
**that** the current-limiting circuit is formed by at least one resistor (6) switched in series with the controllable semiconductor devices (5) and
**that** the resistor (6) of the current-limiting circuit has a resistance value that suffices to limit a short circuit current to a current without danger of spark ignition.

2. Power supply device (1) according to claim 1, **characterized in that** the power-limiting circuit and the current-limiting circuit are connected in series one after another, in particular the current-limiting circuit is connected to the load circuit connector.

3. Power supply device (1) according to claim 1 or 2, **characterized in that** a load current taken from the load circuit connector (4) is measured by a current-measuring means and at least one of the controllable semiconductor devices (5) is controlled by a power control system based upon the measured load current.

4. Power supply device (1) according to claim 3, **characterized in that** at least one of the two controllable semiconductor devices (5) is controlled by at least one power control system designed as control timer (8), that, in the case of high power consumption of the load circuit (2) jeopardizing the intrinsic safety, the semiconductor device (5) interrupts the current flow for a predetermined amount of time and that after this predetermined amount of time, the control timer (8) switches the semiconductor device (5) back into the conductive state, as long as the high power consumption of the load circuit (2) jeopardizing the intrinsic safety is no longer present.

5. Power supply device (1) according to claim 3 or 4, **characterized in that** the current measuring means for measuring the load current is formed at least partially by the resistor (6).

6. Power supply device (1) according to claim 5, **characterized in that** the voltage drop via the resistor (6) of at least one operation amplifier (9) that is switched as a difference amplifier acts as an input signal and the output signal of the operation amplifier (9) acts as a measure for the current load.

7. Power supply device (1) according to any one of claims 1 to 6, **characterized in that** the power consumption of the intrinsically safe load current (2) is controlled directly by a further power control system (10).

8. Power supply device (1) according to claim 7, **characterized in that** the further power control system (10) comprises a digital/analog converter (11).

9. Power supply device (1) according to claim 8, **characterized in that** the digital/analog converter (11) provides a digital input signal from a microprocessor (12) and the analog output signal of the digital/analog converter (11) is provided for controlling the power consumption of the intrinsically safe load circuit (2) using the further power control system (10) of the intrinsically safe load circuit (2).

10. Power supply device (1) according to any one of claims 1 to 9, **characterized in that** the voltage source (3) is based on power-i-technology.

## Revendications

1. Dispositif d'alimentation en énergie (1) destiné à l'alimentation en énergie à sécurité intrinsèque d'un circuit électrique de charge (2) à sécurité intrinsèque, comprenant une source de tension (3), un circuit limiteur de puissance, un circuit limiteur de courant et une borne de circuit électrique de charge (4), le circuit électrique de charge (2) pouvant être raccordé à la borne de circuit électrique de charge (4), le circuit limiteur de puissance et le circuit limiteur de courant agissant entre la source de tension (3) et la borne de circuit électrique de charge (4), le circuit limiteur de puissance étant formé par au moins deux composants semiconducteurs commandables (5) branchés en série,
**caractérisé en ce que**
le circuit limiteur de courant est formé par au moins une résistance (6) branchée en série avec les composants semiconducteurs commandables (5), et **en ce que**
la résistance (6) du circuit limiteur de courant possède une valeur de résistance qui suffit tout juste à limiter un courant de court-circuit à une intensité de courant à laquelle il ne se produit aucun risque d'étincelage.

2. Dispositif d'alimentation en énergie (1) selon la revendication 1, **caractérisé en ce que** le circuit limiteur de puissance et le circuit limiteur de courant sont branchés en série l'un à la suite de l'autre, le circuit limiteur de courant est notamment relié à la borne de circuit électrique de charge (4).

3. Dispositif d'alimentation en énergie (1) selon la revendication 1 ou 2, **caractérisé en ce que** le courant de charge prélevé de la borne de circuit électrique de charge (4) est mesuré avec un moyen de mesure du courant et au moins l'un des composants semiconducteurs commandables (5) est commandé par une commande de puissance au moyen du courant de charge mesuré.

4. Dispositif d'alimentation en énergie (1) selon la revendication 3, **caractérisé en ce qu'**au moins l'un des composants semiconducteurs commandables (5) est commandé par au moins une commande de puissance réalisée sous la forme d'un interrupteur temporisé (8) de telle sorte que dans le cas d'une consommation de puissance élevée, qui menace la sécurité intrinsèque, du circuit électrique de charge (2), le composant semiconducteur (5) interrompt le flux de courant pendant une période prédéfinie, et **en ce que** l'interrupteur temporisé (8), après écoulement de la période prédéfinie, commute de nouveau le composant semiconducteur (8) dans l'état passant aussi longtemps qu'il n'existe plus de consommation de puissance élevée, qui menace la sécurité intrinsèque, du circuit électrique de charge (2).

5. Dispositif d'alimentation en énergie (1) selon la revendication 3 ou 4, **caractérisé en ce que** le moyen de mesure du courant est configuré pour mesurer le courant de charge au moins partiellement à travers la résistance (6).

6. Dispositif d'alimentation en énergie (1) selon la revendication 5, **caractérisé en ce que** la chute de tension aux bornes de la résistance (6) sert de signal d'entrée pour au moins un amplificateur opérationnel (9) connecté en tant qu'amplificateur différentiel et le signal de sortie de l'amplificateur opérationnel (9) fait office de mesure du courant de charge.

7. Dispositif d'alimentation en énergie (1) selon l'une des revendications 1 à 6, **caractérisé en ce que** la consommation de puissance du circuit électrique de charge (2) à sécurité intrinsèque est commandée directement par une commande de puissance supplémentaire (10).

8. Dispositif d'alimentation en énergie (1) selon la revendication 7, **caractérisé en ce que** la commande de puissance supplémentaire (10) possède un convertisseur numérique/analogique (11).

9. Dispositif d'alimentation en énergie (1) selon la revendication 8, **caractérisé en ce qu'**un signal d'entrée numérique est délivré au convertisseur numérique/analogique (11) par un microprocesseur (12) et le signal de sortie analogique du convertisseur numérique/analogique (11) est mis à la disposition du circuit électrique de charge (2) à sécurité intrinsèque en vue de commander la consommation de puissance du circuit électrique de charge (2) à sécurité intrinsèque par la commande de puissance supplémentaire (10).

10. Dispositif d'alimentation en énergie selon l'une des revendications 1 à 9, **caractérisé en ce que** la source de tension (3) est basée sur la technologie des onduleurs de puissance.
